# EUROPEAN PATENT SPECIFICATION

(11) **EP 2 594 421 B1**
(45) Date of publication and mention of the grant of the patent: **29.07.2015**
(21) Application number: 11189383.0
(22) Date of filing: 16.11.2011
(51) Int. Cl.: B60J 10/00, B60J 10/06

(54) **Seal assembly**
Dichtungsanordnung
Ensemble de joint d'étanchéité

(43) Date of publication of application: 22.05.2013
(73) Proprietor: Volvo Car Corporation, 40531 Göteborg (SE)
(72) Inventor: Jonsson, Mats, 46230 Vänersborg (SE)
(74) Representative: Kraenzmer, Martin

(56) References cited:
- WO-A1-01/34933
- DE-A1- 3 544 053
- DE-A1- 19 845 422
- FR-A1- 2 738 534

## Description

### TECHNICAL FIELD

The present disclosure relates to a seal assembly according to the preamble of claim 1. Moreover, the present disclosure relates to a vehicle according to the preamble of claim 15.

### BACKGROUND

A vehicle generally has at least one, though often a plurality of, vehicle doors and each door is generally accommodated in a corresponding opening of the vehicle body. The opening is often at least partially delimited by an opening frame and when the vehicle door is closed, a gap may be present between the door and the opening frame. Such as gap is preferably sealed with a seal assembly, for instance in order to reduce the noise transmitted to the interior of the vehicle and/or improve the visual appearance of the vehicle. Moreover, the sealing strip may reduce the amount of moisture entering the interior of the vehicle. In a similar vein, the seal assembly could also be used for sealing a gap between a door window pane and the door.

An example of a seal assembly according to the above is disclosed in US 5,743,047. Moreover, US 5,743,047 teaches that an aluminium strip may be used to cover outwardly exposed sections of a profile of the seal assembly to thereby render the seal assembly a more aesthetical appearance.

However, with a seal assembly according to US 5,743,047, there is a risk that at least a portion of the seal assembly is displaced during use, due to e.g. internal stresses in portions of the seal assembly, which in turn may result in that at least a portion of the seal assembly may no longer provide appropriate sealing characteristics.

WO 01/34933 A1 discloses a window seal assembly having glass run channels, outer belt seals and a T-shaped trim member. According to WO 01/34933 A1, the window seal assembly eliminates the need for joints, seems, metal fasteners and end caps resulting in an improved aesthetic appearance as well as enhanced window sealing. The trim member can having various finishes such as low gloss black, high gloss black and chrome.

### SUMMARY

One object of the invention is to reduce or ameliorate at least one of the disadvantages of the prior art systems and/or methods, or to provide a useful alternative.

This object is achieved by a seal assembly according to claim 1.

As such, the present disclosure relates to a seal assembly for sealing a gap between a vehicle door and an opening frame of a vehicle body, as well as sealing a gap between a door window pane and the vehicle door. The seal assembly comprises a main portion and a trim member. Moreover, the trim member comprises a trim base portion, a trim web and trim attachment means for attaching the trim member to the main portion. The main portion comprises a first surface delimiting a first gap for receiving a door flange of the vehicle door and a second surface delimiting a second gap for receiving the trim web. The trim web is defined as the portion of the trim member that extends within the second gap when the trim member is attached to themain portion.

According to the present disclosure, the trim attachment means is only located on the trim base portion.

The seal assembly according to the above implies that the trim web is allowed to be displaced, at least to some extent and at least in the extension direction of the trim web, relative to the main body. This in turn implies that the risk of obtaining undesired internal stresses, due to undesired displacements, within the main body may be reduced.

Optionally, the main portion comprises fixation means on the first surface for fixating the main portion to the door flange Optionally, the fixation means comprises a protrusion into the first gap.

Optionally, the trim web comprises a first web surface and a second web surface. The first web surface and the second web surface are opposite and extend throughout the extension of the trim web. Each one of the first web surface and the second web surface is adapted to face a portion of the second surface when the trim member is attached to themain portion. Moreover, each one of the first web surface and the second web surface has a maximum surface profile that is less than 0.5 mm, preferably less than 0.3 mm.

As such, the trim web according to the above is relatively smooth which consequently implies that only low contact forces between the trim web and the second surface may be built up. This in turn implies that the trim web will not impart undesired displacements to any portion of the main portion.

Optionally, the trim web has an extension such that, when the trim member is attached to themain portion, a void is formed between the trim web and the second surface.

The provision of a void may further reduce the risk of undesired relative displacements of the main portion.

Optionally, the main portion comprises a connection portion, said connection portion comprising at least one of said first surface and said second surface.

Optionally, the main portion further comprises a frame sealing lip being adapted to seal against the opening frame when the vehicle door is closed.

Optionally,the first gap is the one of the first gap and the second gap that is located closer to the frame sealing lip.

Optionally, the main portion further comprises a window sealing lip being adapted to seal against the door window pane when the door window pane is in a closed position.

Optionally, the connection portion is made of a material having a modulus of elasticity which is higher than the modulus of elasticity of the material of the frame sealing lip.

Optionally, the frame sealing lip is made of thermoplastic elastomer.

Optionally, the window sealing lip is made of thermoplastic elastomer.

Optionally, the connection portion is made of polypropylen.

Optionally, the trim member is made of a metal or metal alloy. Preferably,the trim member is made of aluminium or an aluminium alloy. A trim member of a metal or a metal alloy implies that the trim member may provide an increased stiffness to the seal assembly which in turn may implya safer attachment of the seal assembly to the vehicle door.

A second aspect of the present disclosure relates to a vehicle comprising an opening frame and a vehicle door. The vehicle door comprises a door window pane and a door flange. According to the second aspect of the present disclosure, the vehicle further comprises a seal assembly according to the first aspect of the present disclosure, the seal assembly being attached to the door flange via the main portion.

### BRIEF DESCRIPTION OF THE DRAWINGS

The present invention will hereinafter be explained in greater detail by means of nonlimiting examples and with reference to the appended drawings in which:
- Fig. 1: illustrates a vehicle;
- Fig. 2: illustrates a first partial cross-section along line II - II of the Fig. 1 vehicle;
- Fig. 3: illustrates a cross-section of a seal assembly according to an embodiment of the present disclosure, and
- Fig. 4: illustrates a method for determining a surface profile of a surface.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

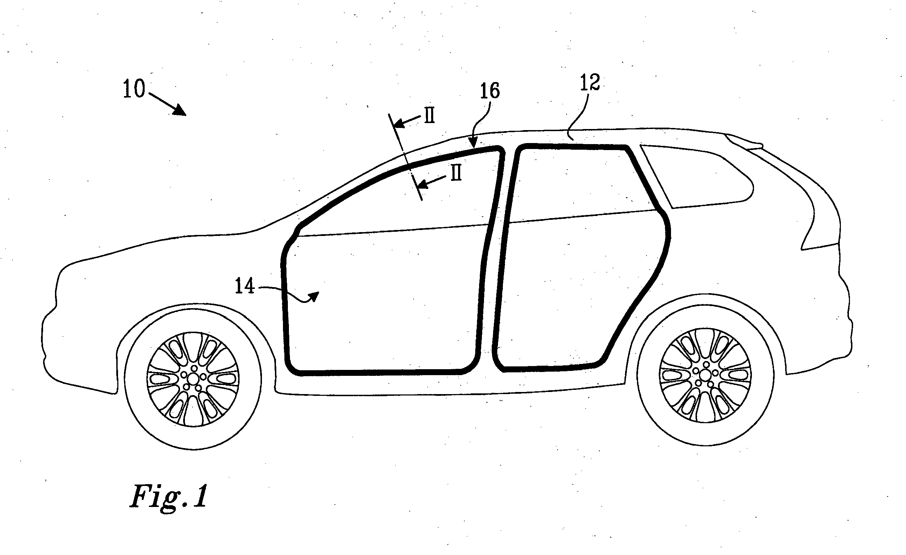

Fig. 1 illustrates a vehicle 10 comprising a vehicle body 12 and a vehicle door 14 accommodated in a first opening frame 16. The vehicle 10 is in Fig. 1 exemplified as a car, but the present invention may be equally applicable to other types of vehicles such as a truck, a van, a bus, a lorry or similar.

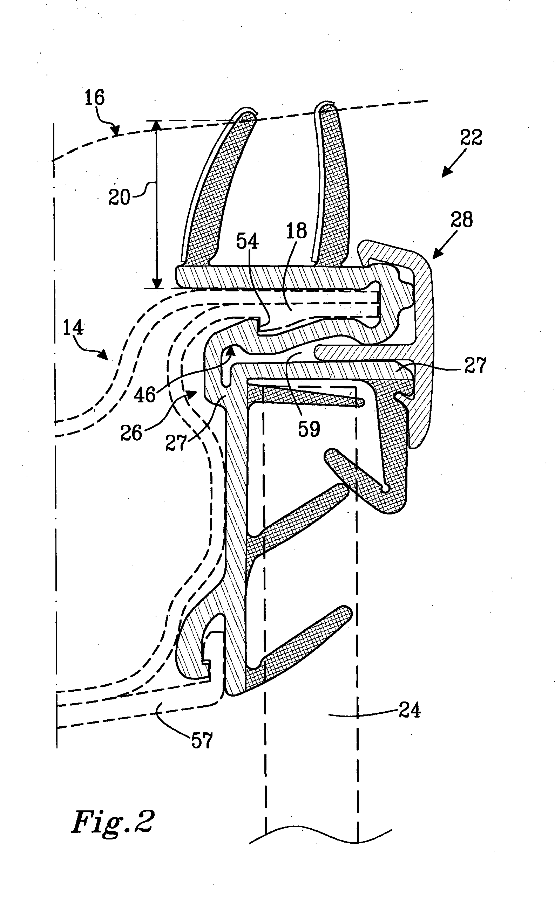

Fig. 2 illustrates a cross-sectional sectional view of a portion of the Fig. 1 vehicle 10 in which an upper portion of the first vehicle door 14 contacts an upper portion of the first opening frame 16.

As may be gleaned from Fig. 2, the vehicle door 14 comprises a doorflange 18. Fig. 2 further illustrates that, when the door is closed, a gap 20 is obtained between the door flange 18 and the first opening frame 16. Purely by way of example, the gap 20 may be within the range of 1 - 20 mm.

In order to seal the gap 20, the present invention proposes the use of a seal assembly 22. The purpose of the seal assembly 22may be to reduce the noise transmitted to the interior of the vehicle 10 and/or improve the visual appearance of the vehicle 10 and/or reduce the amount of moisture entering the interior of the vehicle 10.

Furthermore, the seal assembly 22 of the present invention is also adapted to seal a gap between a door window pane 24 (indicated by dashed lines in Fig. 2) and the vehicle door 14.

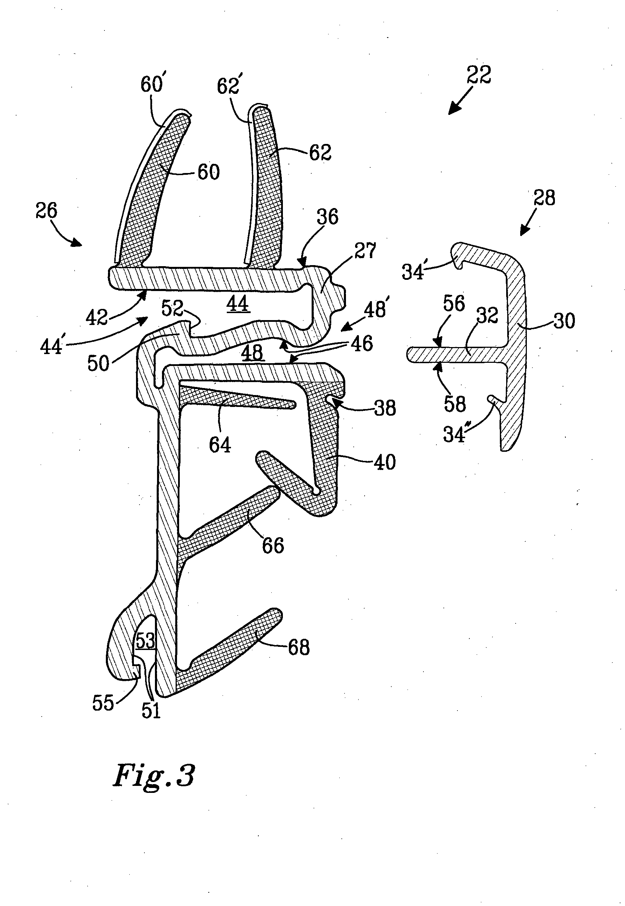

The seal assembly 22 is illustrated in an unattached condition in Fig. 3. As may be gleaned from Fig. 3, the seal assembly 22 according to the present invention comprises a main portion 26 anda trim member 28.The main portion 26 preferably comprises a connection portion 27.The purpose of the trim member 28 may be to provide additional stiffness to the seal assembly 22 and/or or to enhance the aesthetical appearance of the seal assembly 22. The trim member 28 comprises a trim base portion 30, a trim web 32 and trim attachment means 34', 34" for attaching the trim member 28 to the main portion 26. The trim member 28 is preferably made of a metal or a metal alloy. Purely by way of example, the trim member 28 may be made of aluminium or an aluminium alloy.

The trim attachment means 34', 34" is preferably adapted to releasably attach the trim member 28 to the main portion 26. As such, the trim attachment means 34', 34" may for instance comprise a second web with an enlarged end (not shown) that is adapted to engage with a recess (not shown) of the main portion 26, e.g. the connection portion 27, of the seal assembly 22.

However, in the embodiment illustrated in Fig. 3, the trim attachment means 34', 34" comprises a first hook 34' and a second hook 34".The first hook 34' is in the Fig. 3 embodiment adapted to engage with a protrusion 36 of the connection portion 27. Moreover, the second hook 34" is in the Fig. 3 embodiment adapted to engage with a groove 38 in a first window sealing lip 40 that is fixedly attached to the connection portion 27 of themain portion 26. However, in other embodiments of the seal assembly 22, the second hook 34" may be adapted to engage with a groove (not shown) in the connection portion 27 for instance.

The main portion 26 comprises a first surface 42delimiting a first gap44 for receiving the door flange of the vehicle door (not shown in Fig. 3). Moreover, the main portion 26 comprises a second surface 46delimiting a second gap 48for receiving the trim web 32. The trim web 32 is defined as the portion of the trim member 28 that extends within the second gap 42 when the trim member 28 is attached to the main portion 26.
Each one of the first 42 and second 46 surfaces may be continuous or discontinuous. In the implementation of the main portion 26 illustrated in Fig. 3, both of the first and second surfaces 42, 46 are continuous. Furthermore, both of the first and second surfaces 42, 46 may preferably delimit a portion of the connection portion 27 as is illustrated in Fig. 3.

Moreover, in the implementation illustrated in Fig. 3, the connection portion 27 is homogenous, i.e. is of the same material throughout the extension of the connection portion 27, such that both the first 42 and the second 46 surfaces delimit portions of the connection portion 27 that are of the same material.

Furthermore, the first gap 44 comprises a first gap opening 44' and the second gap 48 comprises a second gap opening 48'. Preferably, the first and second gap openings 44', 48' are located on opposite sides of the main portion 26. Purely by way of example, the above may be achieved by designing the connection portion 27 to be substantially S-shaped or substantially Z-shaped.

As may be gleaned from Fig. 2 or Fig. 3, the trim attachment means 34', 34" is only located on the trim base portion 30, i.e. not on the trim web 32. As such, there is preferably nothing on the trim web 32 that, at least to any greater extent, actively prevents a displacement of the trim member 28 relative to the second gap 48, at least in a direction into or out of the second gap 48.

Fig. 3 further illustrates that the main portion 26 comprises fixation means 50 on the first surface 42 for fixating the main portion 26 to the door flange (not shown in Fig. 3).The fixation means 50 preferably comprises a protrusion into the first gap 44. Preferably, the protrusion comprises a first abutment surface 52 adapted to abut a second abutment surface 54 of the door flange 18 (see Fig. 2). In the implementation illustrated in Fig. 3, the first surface 42 delimits a portion of the connection portion 27 such that the connection portion 27 comprises the fixation means 50.

Moreover, the Fig. 3 main portion 26 comprises a third surface 51 delimiting a third gap 53. The third gap 53 is preferably adapted to receive a second door flange 57 of the first vehicle door 14, see e.g. Fig. 2. The third surface 51 preferably comprises a second protrusion 55 for fixation of the second door flange 57 when the seal assembly 22 is attached to the vehicle door 14.

As may be gleaned from Fig. 3, the trim web 32 may comprise a first web surface 56 and a second web surface 58. The first web surface 56 and the second web surface 58 are opposite and extend throughout the extension of the trim web 32, i.e. within the second gap 48 when the trim member 28 is attached to the main portion 26.

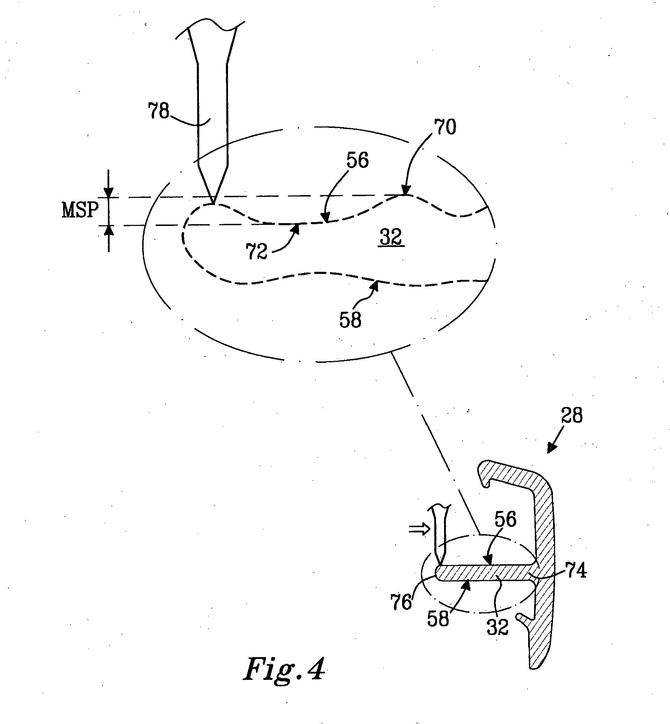

Each one of the first web surface 56 and the second web surface 58 is adapted to face a portion of the second surface 46 when the trim member 28 is attached to the main portion 26. Moreover, each one of the first web surface 56 and the second web surface 58 has a maximum surface profile that is less than 0.5 mm, preferably less than 0.3 mm. A definition of the measure maximum surface profile, as well as an example of a method for determining the maximum surface profile, is presented hereinbelow with reference to Fig. 4.

The trim web 32 may preferably have an extension such that, when the trim member 28 is attached to the main portion 26, a void 59 is formed between the trim web 32 and the second surface46.Such a void 59 is illustrated in Fig. 2. The void 59may generally be a portion of the second gap 48.

Fig. 3 illustrates that the main portion 26may further comprise a first frame sealing lip 60. The first frame sealing lip may preferably be fixedly attached to the connection portion 27.The first frame sealing lip 60 is adapted to seal against the opening frame when the vehicle door is closed (not shown in Fig. 3). Fig. 3 further illustrates that the main portion 26may preferably also comprise a second frame sealing lip 62 that is also fixedly attached to the connection portion 27. Each one of the first and second frame sealing lips 60, 62 may preferably be made of thermoplastic elastomeror, more preferred,athermoplastic vegapren.

Preferably, the main portion 26, comprising the connection portion 27 and preferably also at least one frame sealing lip 60, 62, may be manufactured in an extrusion process. As such, the connection portion 27 and at least one frame sealing lip 60, 62 may preferably be co-extruded.

Moreover, at least a portion of at least one, but preferably both, of the first and second frame sealing lips 60, 62 may preferably be coated by a coating layer 60', 62'. The material of the coating layer may preferably be a material sold under the trade name FLOCK.

Preferably, the above coating layer 60', 62' comprises fibres of at least one of the following materials: polyamide, polyetheneand polyester.Preferably, the fibres are relatively small. Purely by way of example, the coating layer 60', 62' may be applied to the corresponding sealing lip 60, 62 by applying glue (not shown) to the surface of the sealing lip 60, 62 and subsequentlyelectrostatically charging the sealing lip 60, 62 such that the fibres will rise.

As another alternative, an again purely by way of example, a tape (not shown) comprising the above fibres may be applied to the surface of the corresponding sealing lip 60, 62 during the extrusion thereof. The tape may for instance be attached to the corresponding sealing lip 60, 62 by heating the tape and/or the corresponding sealing lip 60, 62. Purely by way of example, the tape may be attached to the sealing lip by ultrasonic welding.

Moreover, Fig. 3 illustrates that the first gap 44 is preferably the one of the first gap 44 and the second gap 48 that is located closer to the at least one frame sealing lips 60, 62. In other words, when the seal assembly 22 is attached to the door flange of a vehicle (not shown in Fig. 3), the first gap 44 is preferably closer to the opening frame (not shown in Fig. 3) of the vehicle. However, in other embodiments of the seal assembly 22 of the present invention, the order may be reversed such that the second gap 48 is located closest to the at least one frame sealing lips 60, 62.

Fig. 3 further illustrates that the main portion 26may further comprise a first window sealing lip 40. Purely by way of example, the first window sealing lip 40 may befixedly attached to the connection portion 27. The window sealing lip 40 is adapted to seal against the door window pane (not shown in Fig. 3) when the door window pane is in a closed position. In addition, Fig. 3 illustrates a preferred embodiment wherein the seal assembly 22 comprises a plurality of window sealing lips. In fact, in the Fig. 3 embodiment, the seal assembly 22 comprises four window sealing lips, viz the first 40, a second 64, a third 66 and a fourth 68 window sealing lip. Each one of the above four sealing lips 40, 64, 66, 68 is preferably fixedly attached to the connection portion 27.

As for the frame sealing lip, a window sealing lip may preferably be made of thermoplastic elastomer, a thermoplastic vegapren being more preferred. Moreover, a window sealing lip maypreferably be co-extruded with at least the connection portion 27. Furthermore, a window sealing lip may preferably be coated with a layer (not shown) of a plastics material in order to *inter alia* reduce the friction between the door window pane (not shown in Fig. 3) and the window sealing lip. Instead of, or in addition to, obtaining a reduced friction, the above layer may be applied in order to obtain a durable surface of the window sealing lip. Purely by way of example, the above layer may be co-extruded with the window sealing lip. Preferably, the above layer is relatively thin.

The connection portion 27is preferably made of a material that has a modulus of elasticity which is higher than the modulus of elasticity of the material of the frame sealing lip 60, 62. Purely by way of example, the connection portion 26 may be made of polypropylene, e.g. hard polypropylene.

Fig. 4 illustrates a method for determining a maximum surface profile of a surface of the trim web 32. In Fig. 4, the first web surface 56 is used as an example but it should be emphasized that the method is equally applicable for determining the maximum surface profile of the second web surface 58. It should be noted that the surface roughness of the first and second web surfaces 56, 58 has been exaggerated in Fig. 4 in order to make the below presentation more easy to follow.

The maximum surface profile MSP of the first web surface 56 is defined as the height, i.e. the distance in a direction extending perpendicularly to the plane in which the first web surface 56 extends, between the lowest trough 72 and the highest crest 70 of the first web surface 56 when measured in a direction that is substantially parallel to a direction that extends from a trim web proximal portion 74 to a trim web distal portion 76.As used herein, the trim web proximal portion 74 is located proximal to the trim base portion 30, whereas the trim web distal portion 76 is located distal to the trim base portion 30.

The lowest trough 72 as well as the highest crest70 of the first web surface 56 may be determined in a plurality of ways. Purely by way of example, the highest crest 70 and the lowest trough 72 may be determined using *inter alia* optical, contact and/or pseudo contact methods.

Fig. 4 illustrates a preferred determination method wherein a stylus 78 is moved in a first direction relative to the trim web 32. The first direction is parallel to a direction that extends from the trim web proximal portion 74 to the trim web distal portion 76. The stylus 78 is adapted to contact the first web surface 56 and to determine the vertical position of the tip of the stylus 78 such that at least the highest crest 70 and the lowest trough 72 of the first web surface 56 may be determined. Preferably, the contour of the first web surface 56 may be determined using the stylus 78.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art.

For example, it is expressly intended that all combinations of those elements and/or method steps which perform substantially the same function in substantially the same way to achieve the same results are within the scope of the invention.

Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A seal assembly (22) for sealing a gap (20) between a vehicle door (14) and an opening frame (16) of a vehicle (10), as well as sealing a gap between a door window pane (24) and said vehicle door (16), said seal assembly (22) comprising a main portion (26) and a trim member (28), said trim member (28) comprising a trim base portion (30), a trim web (32) and trim attachment means (34', 34") for attaching said trim member (28) to said main portion (26), said main portion (26) comprising a first surface (42) delimiting a first gap (44) for receiving a door flange (18) of said vehicle door (14) and a second surface (46) delimiting a second gap (48) for receiving said trim web (32), said trim web (32) being defined as the portion of said trim member (28) that extends within said second gap (48) when said trim member (28) is attached to said main portion (26), **characterized in that** said trim attachment means (34', 34") is only located on said trim base portion (30) such that said trim web (32) is allowed to be displaced, at least in the extension direction of said trim web (32), relative to said main portion (26).

2. The seal assembly (22) according to claim 1, wherein said main portion (26) comprises fixation means (50) on said first surface (42) for fixating said main portion (26) to said door flange (18).

3. The seal assembly (22) according to claim 2, wherein said fixation means (50) comprises a protrusion into said first gap (44).

4. The seal assembly (22) according to any one of the preceding claims, wherein said trim web (32) comprises a first web surface (56) and a second web surface (58), said first web surface (56) and said second web surface (58) being opposite and extending throughout the extension of said trim web (32), each one of said first web surface (56) and said second web surface (58) being adapted to face a portion of said second surface (46) when said trim member (28) is attached to said main portion (26), each one of said first web surface (56) and said second web surface (58) having maximum surface profile (MSP) that is less than 0.5 mm, preferably less than 0.3 mm.

5. The seal assembly (22) according to any one of the preceding claims, wherein said trim web (32) has an extension such that, when said trim member is attached to said main portion (26), a void (59) is formed between said trim web (32) and said second surface (46).

6. The seal assembly (22) according to any one of the preceding claims, wherein said main portion (26) comprises a connection portion (27), said connection portion comprising at least one of said first surface (42) and said second surface (46).

7. The seal assembly (22) according to any one of the preceding claims, wherein main portion (26) further comprises a frame sealing lip (60, 62) being adapted to seal against said opening frame (16) when said vehicle door (14) is closed.

8. The seal assembly (22) according to claim 6, wherein said first gap (44) is the one of said first gap (44) and said second gap (48) that is located closer to said frame sealing lip (60, 62).

9. The seal assembly (22) according to any one of the preceding claims, wherein said main portion (26) further comprises a window sealing lip (40, 64, 66, 68) being adapted to seal against said door window pane (24) when said door window pane (24) is in a closed position.

10. The seal assembly (22) according to any one of claims 7 - 9, wherein said connection portion (27) is made of a material having a modulus of elasticity which is higher than the modulus of elasticity of the material of the frame sealing lip (60, 62).

11. The seal assembly according to any one of claims 7 - 10, wherein said frame sealing lip (60, 62) is made of thermoplastic elastomer.

12. The seal assembly according to any one of claims 8 - 11, wherein said window sealing lip (40, 64, 66, 68) is made of thermoplastic elastomer.

13. The seal assembly according to any one of the preceding claims, wherein said connection portion (27) is made of polypropylen.

14. The seal assembly according to any one of the preceding claims, wherein said trim member (28) is made of a metal or metal alloy, preferably said trim member (28) is made of aluminium or an aluminium alloy.

15. A vehicle (10) comprising an opening frame (16) and a vehicle door (14), said vehicle door (14) comprising a door window pane (24) and a door flange (18), **characterized in that** said vehicle (10) further comprises a seal assembly (22) according to any one of the preceding claims, said seal assembly (22) being attached to said door flange (18) via said main portion (26).

## Patentansprüche

1. Dichtungsanordnung (22) zum Abdichten eines Spalts (20) zwischen einer Fahrzeugtür (14) und einem Öffnungsrahmen (16) eines Fahrzeugs (10) sowie zum Abdichten eines Spalts zwischen einer Türfensterplatte (24) und der Fahrzeugtür (14),
wobei die Dichtungsanordnung (22) einen Hauptabschnitt (26) und ein Verkleidungselement (28) umfasst,
wobei das Verkleidungselement (28) einen Verkleidungsbasisabschnitt (30), ein Verkleidungsgewebe (32) und ein Verkleidungsbefestigungsmittel (34', 34") zum Befestigen des Verkleidungselements (28) an dem Hauptabschnitt (26) umfasst,
wobei der Hauptabschnitt (26) eine erste Oberfläche (42), die einen ersten Spalt (44) zum Aufnehmen eines Türflansches (18) der Fahrzeugtür (14) begrenzt, und eine zweite Oberfläche (46), die einen zweiten Spalt (48) zum Aufnehmen des Verkleidungsgewebes (32) begrenzt, umfasst,
wobei das Verkleidungsgewebe (32) als der Abschnitt des Verkleidungselements (28) definiert ist, der sich in den zweiten Spalt (48) erstreckt, wenn das Verkleidungselement (28) an dem Hauptabschnitt (26) befestigt ist,
**dadurch gekennzeichnet, dass**
das Verkleidungsbefestigungsmittel (34', 34") nur an dem Verkleidungsbasisabschnitt (30) befestigt ist, sodass das Verkleidungsgewebe (32) verschoben werden kann, zumindest in eine Ausdehnungsrichtung des Verkleidungsgewebes (32) in Bezug auf den Hauptabschnitt (26).

2. Dichtungsanordnung (22) nach Anspruch 1, wobei der Hauptabschnitt (26) Fixiermittel (50) auf der ersten Oberfläche (42) zum Fixieren des Hauptabschnitts (26) an dem Türflansch (18) umfasst.

3. Dichtungsanordnung (22) nach Anspruch 2, wobei das Fixiermittel (50) einen Vorsprung in den ersten Spalt (44) hinein umfasst.

4. Dichtungsanordnung (22) nach einem der vorherigen Ansprüche, wobei das Verkleidungsgewebe (32) eine erste Gewebeoberfläche (56) und eine zweite Gewebeoberfläche (58) umfasst,
wobei die erste Gewebeoberfläche (56) und die zweite Gewebeoberfläche (58) entgegengesetzt sind und sich durch die Ausdehnung des Verkleidungsgewebes (32) erstrecken,
wobei die erste Gewebeoberfläche (56) und die zweite Gewebeoberfläche (58) jeweils zum Weisen zu einem Abschnitt der zweiten Oberfläche (46) ausgelegt sind, wenn das Verkleidungselement (28) an dem Hauptabschnitt (26) befestigt ist,
wobei die erste Gewebeoberfläche (56) und die zweite Gewebeoberfläche (58) jeweils ein maximales Oberflächenprofil (MSP) aufweisen, das weniger als 0,5 mm beträgt, vorzugsweise weniger als 0,3 mm.

5. Dichtungsanordnung (22) nach einem der vorhergehenden Ansprüche, wobei das Verkleidungsgewebe (32) eine solche Ausdehnung hat, dass, wenn das Verkleidungselement an dem Hauptabschnitt (26) befestigt wird, ein Hohlraum (59) zwischen dem Verkleidungsgewebe (32) und der zweiten Oberfläche (46) gebildet wird.

6. Dichtungsanordnung (22) nach einem der vorherigen Ansprüche, wobei der Hauptabschnitt (26) einen Verbindungsabschnitt (27) umfasst, wobei der Verbindungsabschnitt mindestens eines von erster Oberfläche (42) und zweiter Oberfläche (46) umfasst.

7. Dichtungsanordnung (22) nach einem der vorherigen Ansprüche, wobei der Hauptabschnitt (26) ferner eine Rahmendichtungslippe (60, 62) umfasst, die zum Abdichten des Öffnungsrahmens (16) ausgelegt ist, wenn die Fahrzeugtür (14) geschlossen ist.

8. Dichtungsanordnung (22) nach Anspruch 6, wobei der erste Spalt (44) der erste Spalt (44) oder der zweite Spalt (48) ist, der näher von der Rahmendichtungslippe (60, 62) angeordnet ist.

9. Dichtungsanordnung (22) nach einem der vorherigen Ansprüche, wobei der Hauptabschnitt (26) ferner eine Fensterdichtungslippe (40, 64, 66, 68) umfasst, die zum Abdichten der Türfensterplatte (24) ausgelegt ist, wenn sich die Türfensterplatte (24) in einer geschlossenen Position befindet.

10. Dichtungsanordnung (22) nach einem der Ansprüche 7 bis 9, wobei der Verbindungsabschnitt (27) aus einem Material hergestellt ist, das ein Elastizitätsmodul aufweist, das höher ist als das Elastizitätsmodul des Materials der Rahmendichtungslippe (60, 62).

11. Dichtungsanordnung nach einem der Ansprüche 7 bis 10, wobei die Rahmendichtungslippe (60, 62) aus einem thermoplastischen Elastomer hergestellt ist.

12. Dichtungsanordnung nach einem der Ansprüche 8 bis 11, wobei die Fensterdichtungslippe (40, 64, 66, 68) aus einem thermoplastischen Elastomer hergestellt ist.

13. Dichtungsanordnung nach einem der vorherigen Ansprüche, wobei der Verbindungsabschnitt (27) aus Polypropylen hergestellt ist.

14. Dichtungsanordnung nach einem der vorherigen Ansprüche, wobei das Verkleidungselement (28) aus einem Metall oder einer Metalllegierung hergestellt ist, wobei das Verkleidungselement (28) vorzugsweise aus Aluminium oder einer Aluminiumlegierung hergestellt ist.

15. Fahrzeug (10), umfassend einen Öffnungsrahmen (16) und eine Fahrzeugtür (14), wobei die Fahrzeugtür (14) eine Türfensterplatte (24) und einen Türflansch (18) umfasst, **dadurch gekennzeichnet, dass** das Fahrzeug (10) ferner eine Dichtungsanordnung (22) nach einem der vorhergehenden Ansprüche umfasst, wobei die Dichtungsanordnung (22) an dem Türflansch (18) über den Hauptabschnitt (26) befestigt ist.

## Revendications

1. Ensemble de joint d'étanchéité (22) servant à étanchéifier un espace (20) entre une portière de véhicule (14) et un encadrement d'ouverture (16) d'un véhicule (10), ainsi qu'à étanchéifier un espace entre une vitre de portière (24) et ladite portière de véhicule (14), ledit ensemble de joint d'étanchéité (22) comprenant une partie principale (26) et un élément de garniture (28), ledit élément de garniture (28) comprenant une partie de base de garniture (30), une lame de garniture (32) et un moyen de fixation de garniture (34', 34") servant à fixer ledit élément de garniture (28) à ladite partie principale (26), ladite partie principale (26) comprenant une première surface (42) délimitant un premier espace (44) destiné à recevoir un bord de portière (18) de ladite portière de véhicule (14) et une seconde surface (46) délimitant un second espace (48) destiné à recevoir ladite lame de garniture (32), ladite lame de garniture (32) étant définie comme la partie de l'élément de garniture (28) qui s'étend à l'intérieur dudit second espace (48) lorsque ledit élément de garniture (28) est fixé à ladite partie principale (26), **caractérisé en ce que** ledit moyen de fixation de garniture (34', 34") est uniquement disposé sur ladite partie de base de garniture (30) de manière à ce que ladite lame de garniture (32) puisse être déplacée, au moins dans la direction d'extension de ladite lame de garniture (32), par rapport à ladite partie principale (26).

2. Ensemble de joint d'étanchéité (22) selon la revendication 1, dans lequel ladite partie principale (26) comprend un moyen d'assujettissement (50) sur ladite première surface (42) servant à assujettir ladite partie principale (26) audit bord de portière (18).

3. Ensemble de joint d'étanchéité (22) selon la revendication 2, dans lequel ledit moyen d'assujettissement (50) comprend une protubérance faisant saillie dans ledit premier espace (44).

4. Ensemble de joint d'étanchéité (22) selon l'une quelconque des revendications précédentes, dans lequel ladite lame de garniture (32) comprend une première surface de lame (56) et une seconde surface de lame (58), ladite première surface de lame (56) et ladite seconde surface de lame (58) étant opposées et s'étendant sur toute l'étendue de ladite lame de garniture (32), chacune de ladite première surface de lame (56) et de ladite seconde surface de lame (58) étant conçue pour se trouver face à une partie de ladite seconde surface (46) lorsque ledit élément de garniture (28) est fixé à ladite partie principale (26), chacune de ladite première surface de lame (56) et de ladite seconde surface de lame (58) présentant un profil de surface maximal (MSP) inférieur à 0,5 mm, de préférence inférieur à 0,3 mm.

5. Ensemble de joint d'étanchéité (22) selon l'une quelconque des revendications précédentes, dans lequel ladite lame de garniture (32) présente une étendue telle que, lorsque ledit élément de garniture est fixé à ladite partie principale (26), un vide (59) est formé entre ladite lame de garniture (32) et ladite seconde surface (46).

6. Ensemble de joint d'étanchéité (22) selon l'une quelconque des revendications précédentes, dans lequel ladite partie principale (26) comprend une partie de raccordement (27), ladite partie de raccordement comprenant au moins l'une de ladite première surface (42) et de ladite seconde surface (46).

7. Ensemble de joint d'étanchéité (22) selon l'une quelconque des revendications précédentes, dans lequel ladite partie principale (26) comprend en outre une lèvre d'étanchéité d'encadrement (60, 62) conçue pour se placer en contact d'étanchéité contre ledit encadrement d'ouverture (16) lorsque ladite portière de véhicule (14) est fermée.

8. Ensemble de joint d'étanchéité (22) selon la revendication 6, dans lequel ledit premier espace (44) est celui dudit premier espace (44) et dudit second espace (48) qui est situé le plus près de ladite lèvre d'étanchéité d'encadrement (60, 62).

9. Ensemble de joint d'étanchéité (22) selon l'une quelconque des revendications précédentes, dans lequel ladite partie principale (26) comprend en outre une lèvre d'étanchéité de fenêtre (40, 64, 66, 68) conçue pour se placer en contact d'étanchéité contre ladite vitre de portière (24) lorsque ladite vitre de portière (24) se trouve dans une position fermée.

10. Ensemble de joint d'étanchéité (22) selon l'une quelconque des revendications 7 à 9, dans lequel ladite partie de raccordement (27) est composée d'un matériau présentant un module d'élasticité supérieur au module d'élasticité du matériau de la lèvre d'étanchéité d'encadrement (60, 62).

11. Ensemble de joint d'étanchéité selon l'une quelconque des revendications 7 à 10, dans lequel ladite lèvre d'étanchéité d'encadrement (60, 62) est composée d'élastomère thermoplastique.

12. Ensemble de joint d'étanchéité selon l'une quelconque des revendications 8 à 11, dans lequel ladite lèvre d'étanchéité de fenêtre (40, 64, 66, 68) est composée d'élastomère thermoplastique.

13. Ensemble de joint d'étanchéité selon l'une quelconque des revendications précédentes, dans lequel ladite partie de raccordement (27) est composée de polypropylène.

14. Ensemble de joint d'étanchéité selon l'une quelconque des revendications précédentes, dans lequel ledit élément de garniture (28) est composé d'un métal ou d'un alliage de métal, de préférence ledit élément de garniture (28) est composé d'aluminium ou d'un alliage d'aluminium.

15. Véhicule (10) comprenant un encadrement d'ouverture (16) et une portière de véhicule (14), ladite portière de véhicule (14) comprenant une vitre de portière (24) et un bord de portière (18), **caractérisé en ce que** ledit véhicule (10) comprend en outre un ensemble de joint d'étanchéité (22) selon l'une quelconque des revendications précédentes, ledit ensemble de joint d'étanchéité (22) étant fixé audit bord de portière (18) par le biais de ladite partie principale (26).
